# EUROPÄISCHE PATENTSCHRIFT

(11) **EP 2 265 844 B1**
(45) Veröffentlichungstag und Bekanntmachung des Hinweises auf die Patenterteilung: **05.08.2015**
(21) Anmeldenummer: 09721758.2
(22) Anmeldetag: 04.02.2009
(51) Int. Cl.: F16H 59/70, F16H 61/70

(54) **GETRIEBESTELLER**
TRANSMISSION ACTUATOR
ACTIONNEUR DE TRANSMISSION

(30) Priorität: 15.03.2008 DE 102008014504
(43) Veröffentlichungstag der Anmeldung: 29.12.2010
(73) Patentinhaber: WABCO GmbH, 30453 Hannover (DE)
(72) Erfinder: BRAMMER, Christian, 29303 Bergen (DE); HEURICH, Mike, 31552 Apelern (DE); HÖLSCHER, Reiner, 30926 Seelze (DE); SIEVERS, Andreas, 31319 Sehnde (DE); WIGGERS, Tino, 30926 Seelze (DE)
(74) Vertreter: Lauerwald, Jörg
(86) Internationale Anmeldenummer: PCT/EP2009/000728
(87) Internationale Veröffentlichungsnummer: WO 2009/115167

(56) Entgegenhaltungen:
- EP-A- 1 055 914
- EP-A- 1 160 485
- FR-A- 2 749 907
- US-A1- 2003 176 258

## Beschreibung

Die Erfindung betrifft einen Getriebesteller für ein Getriebe, mit (a) einem Splitsensor, der ausgebildet ist zum Erfassen einer Schaltstellung einer in eine Splitsensor-Messrichtung längs verschieblichen Splitstufe des Getriebes, (b) einem Gassensensor, der ausgebildet ist zum Erfassen einer Gassenstangenposition einer in eine Gassensensor-Messrichtung längs verschieblichen Gassenstange des Getriebes und (c) einem Gangsensor, der ausgebildet ist zum Erfassen einer Gangstangenposition einer in eine Gangsensor-Messrichtung längs verschieblichen Gangstange des Getriebes. Derartige Getriebesteller sind bekannt und dienen dazu, einen Schaltzustand des Getriebes zu erfassen. Nachteilig an bekannten Getriebestellern sind deren aufwändige Herstellung und deren aufwändige Montage an einem Getriebe. Bekannte Getriebesteller weisen zudem eine relativ hohe Ausfallwahrscheinlichkeit auf.

Aus der EP 1 055 914 ist eine Anordnung magnetischer Positionssensoren bekannt, die häufig in Getriebestellern eingesetzt wird. Die dort beschriebene Anordnung bezieht sich jedoch auf das Detektieren von einer Rotation und Translationen. Demgegenüber werden in der vorliegenden Erfindung drei Translationen detektiert.

Außerdem ist aus der US 2003/176258A1 ein Getriebesteller für ein Getriebe mit Gassensensor und Gangsensor bekannt. Dieses Dokument offenbart den nächstliegenden Stand der Technik.

Der Erfindung liegt die Aufgabe zugrunde, einen Getriebesteller anzugeben, bei dem alle drei Translationen für die Schaltstellungen von Splitstufe, Gang und Gasse mit einer geringen Störanfälligkeit detektierbar sind.

Die Erfindung löst das Problem durch einen gattungsgemäßen Getriebesteller, bei dem zwei der Messrichtungen im Wesentlichen parallel verlaufen und eine Messrichtungsebene aufspannen und die dritte der Messrichtungen mit der Messrichtungsebene einen stumpfen Winkel bildet.

Vorteilhaft an einem derartigen Getriebesteller ist seine geringe Störanfälligkeit. Bei herkömmlichen Getriebestellern kann das Schalten von einem Getriebezustand in einen anderen dazu führen, dass nicht nur einer der Sensoren ein Signal detektiert, wie es sein sollte, sondern dass zwei oder alle Sensoren ein Signal liefern. Das liegt daran, dass sich die einzelnen Sensoren untereinander beeinflussen. Der erfindungsgemäße Getriebesteller unterdrückt derartige Störsignale aufgrund der räumlichen Anordnung der Sensoren weitgehend, so dass die Auswertung einfach und weniger fehleranfällig ist.

Es ist ein weiterer Vorteil, dass der erfindungsgemäße Getriebesteller eine einfache Bauform gestattet, die eine einfache und schnelle Montage des Getriebestellers ermöglicht. Der erfindungsgemäße Getriebesteller besitzt zudem einen kleinen Bauraum und ist damit platzsparend.

Im Rahmen der vorliegenden Beschreibung wird unter einem Erfassen einer Schaltstellung oder einer Position insbesondere jeder Vorgang verstanden, bei dem Messwerte aufgenommen werden, aufgrund derer auf die Schaltstellung bzw. die Position geschlossen wird. Bei dieser Position kann es sich um eine binäre Angabe handeln, also um die Aussage, ob beispielsweise die Splitstufenstange sich in einer ersten oder einer zweiten Position befindet. Bevorzugt liefert das Erfassen einen Positionswert, der eine Positionsangabe relativ zum Getriebe oder zum Getriebesteller darstellt.

Die Splitsensor-Messrichtung verläuft in der Regel parallel zu einer Längsrichtung der Splitstufenstange, die Gassensensor-Messrichtung zu einer Längsrichtung der Gassenstange und die Gangsensor-Messrichtung zu einer Längsrichtung der Gangstange.

Das Merkmal, dass der Splitsensor ausgebildet ist zum Erfassen einer Schaltstellung einer in eine Splitsensor-Messrichtung längsverschieblichen Splitstufenstange des Getriebes, bedeutet insbesondere auch, dass die Splitstufenstange eine Splitstufen-Verschieberichtung hat, die der Splitsensor-Messrichtung entspricht. Entsprechend hat die Gassenstange eine Gassenstangen-Verschieberichtung, die der Gassensensor-Messrichtung entspricht. Wird eine Splitstufe des Getriebes geschaltet, so führt das zu einer Längsverschiebung der Splitstufenstange in eine Splitstufenstangen-Verschieberichtung, die der Splitsensor-Messrichtung entspricht.

Unter dem Merkmal, dass zwei der Messrichtungen im Wesentlichen parallel verlaufen, ist insbesondere zu verstehen, dass es bevorzugt, nicht aber notwendig ist, dass die zwei Messrichtungen im strengen Sinne parallel verlaufen. So ist es möglich, dass die zwei Messrichtungen unter einem kleinen Winkel windschief zueinander verlaufen. Dieser kleine Winkel liegt beispielsweise bei unter 5°. Wenn die beiden Messrichtungen im strengen Sinne parallel zueinander verlaufen, ist die Messrichtungsebene diejenige eindeutig bestimmte Ebene, in der beide Messrichtungen verlaufen. Die Messrichtungsebene verläuft dann beispielsweise durch die Splitstufenstange und die Gassenstange. Wenn die beiden Messrichtungen nicht im strengen Sinne parallel zueinander verlaufen, wird als Messrichtungsebene eine Ausgleichsebene gewählt, die so liegt, dass das Quadrat der Winkel, die die beiden Messrichtungen mit der Ausgleichsebene bilden, minimal wird.

In einer bevorzugten Ausführungsform schließt die dritte Messrichtung mit der Messrichtungsebene einen Winkel von mehr als 80° ein. Auf diese Weise werden Störeinflüsse der einzelnen Sensoren aufeinander weitgehend minimiert. Je größer der Winkel ist, desto geringer sind die Störeinflüsse. Besonders bevorzugt ist daher, dass die dritte Messrichtung im Wesentlichen senkrecht auf der Messrichtungsebene steht.

Die Störung der einzelnen Sensoren untereinander ist besonders gering, wenn die Splitsensor-Messrichtung und die Gassensensor-Messrichtung im Wesentlichen parallel verlaufen und die Gangsensor-Messrichtung mit der Messrichtungsebene einen stumpfen Winkel, der insbesondere mehr als 90° beträgt, bildet.

Ein besonders robuster Getriebesteller ergibt sich, wenn der Gassensensor einen Gassensensormagneten umfasst, der sich über weniger als ein Drittel, insbesondere über weniger als ein Fünftel eines Umfangswinkels der Gassenstange erstreckt. Der Umfangswinkel wird dadurch ermittelt, dass eine Längsachse der Gassenstange ermittelt wird. Wenn die Gassenstange im Wesentlichen zylinderförmig ist, ist die Gassenstange rotationssymmetrisch bezüglich der Längsachse. Ausgehend von der Längsachse ist der Umfangswinkel derjenige Winkelbereich, unter dem der Gassensensormagnet von der Längsachse aus gesehen erscheint.

Um mittels des Gassensensormagneten die Gassenstangenposition besonders genau ermitteln zu können, ist grundsätzlich ein Gassensensormagnet vorteilhaft, der vollständig um die Gassenstange herum verläuft, so dass der Umfangswinkel 360° ist. Es hat sich jedoch überraschenderweise herausgestellt, dass es vorteilhaft ist, den Gassensensormagneten kleiner auszubilden. Dadurch wird zwar ein schwächeres Signal erhalten und, dieser nachteilige Effekt wird jedoch dadurch überkompensiert, dass die Störsignale auf die beiden anderen Sensoren kleiner sind. Je kleiner also der Umfangswinkel ist, über den sich der Gassensensormagnet erstreckt, umso vorteilhafter ist es hinsichtlich des Störungseinflusses auf die übrigen Sensoren. Besonders bevorzugt beträgt der Umfangswinkel daher ein Bruchteil des Umfangswinkels, insbesondere weniger als 70° oder sogar als 45°.

Besonders einfach auswertbare Signale ergeben sich, wenn der Gassensensormagnet kreissegmentförmig und drehsicher an der Gassenstange befestigt ist. Auf diese Weise liefert der Gassenstangensensor einerseits starke und gut auswertbare Positionssignale und andererseits ist der Störeinfluss auf die übrigen Sensoren gering.

Gemäß einer bevorzugten Ausführungsform ist der Gassensensormagnet an einem Adapter befestigt, der in einer Gassenstangen-Längsrichtung unverschieblich an der Gassenstange befestigt ist, wobei der Adapter um die Gassenstangen-Längsrichtung drehsicher in einer Führungshülse geführt ist. Dabei verläuft die Gassenstangen-Längsrichtung entlang der Gassenstangen-Längsachse und entspricht der Gassensensor-Messrichtung. Die Führungshülse ist beispielsweise an einem Gehäuse befestigt. Die Benennung als Führungshülse ist nicht einschränkend dahingehend zu verstehen, dass die Führungshülse den Adapter vollständig radial umschließen muss. Maßgeblich ist lediglich, dass die Führungshülse eine drehsichere Führung des Adapters gestattet. Unter dem Merkmal, dass der Adapter drehsicher in der Führungshülse geführt ist, ist insbesondere zu verstehen, dass der Adapter sich nicht um die Gassenstangen-Längsrichtung drehen kann.

Alternativ besitzt der Getriebesteller eine am Gehäuse drehsicher befestigte Spiralfeder, wobei der Adapter drehsicher an der Spiralfeder befestigt ist, so dass der Adapter drehsicher am Gehäuse befestigt ist.

Bevorzugt umfasst der Gassensensor ein Gassensensorelement zum Erfassen der Gassenstangenposition durch Messen einer Gassensensor-Magnetposition des Gassensensormagneten. Auf gleiche Weise umfasst der Gangsensor bevorzugt ein Gangsensorelement, das angeordnet ist zum Erfassen der Gangstangenposition durch Messen einer Gangsensor-Magnetposition des Gangsensormagneten. Der Splitsensor umfasst bevorzugt einen Splitsensor-Ringmagneten, der an einer Splitstange befestigt ist, wobei die Splittstange so zum Getriebe angeordnet ist, dass ein Schalten einer Splitstufe des Getriebes zu einer Längsverschiebung des Splitsensor-Ringmagneten führt und wobei der Splitsensor ein Splitsensorelement umfasst, das angeordnet ist zum Erfassen dieser Längsverschiebung. In anderen Worten handelt es sich bei den Sensorelementen bevorzugt um magnetoinduktive Sensorelemente, insbesondere um ein PLCD-Sensorelement (PLCD, permanent magnet linear contact-less displacement, lineare, kontaktlose Verschiebesensoren mit Permanentmagneten).

Bevorzugt besitzt der Getriebesteller ein Sensor-Elementgehäuse, das das Splitsensorelement, das Gassensensorelement und das Gangsensorelement umgreift. Wenn oben von einem Gehäuse gesprochen wird, ist insbesondere das Sensor-Element-gehäuse gemeint.

Im Folgenden wird die Erfindung anhand der beigefügten Zeichnungen näher erläutert. Dabei zeigt
- Figur 1: eine Anordnung eines Gassensensors und eines Splitsensors zu einer Gangstange eines Getriebes,
- Figur 2: die Anordnung gemäß Figur 2 zusätzlich mit einem Gangsensor,
- Figur 3: die Anordnung gemäß Figur 2 in einer anderen perspektivischen Ansicht,
- Figur 4: ein Sensorelementgehäuse für einen erfindungsgemäßen Getriebesteller,
- Figur 5: einen Querschnitt durch einen Adapter eines erfindungsgemäßen Getriebestellers und
- Figur 6: eine Seitenansicht des Adapters gemäß Figur 5.

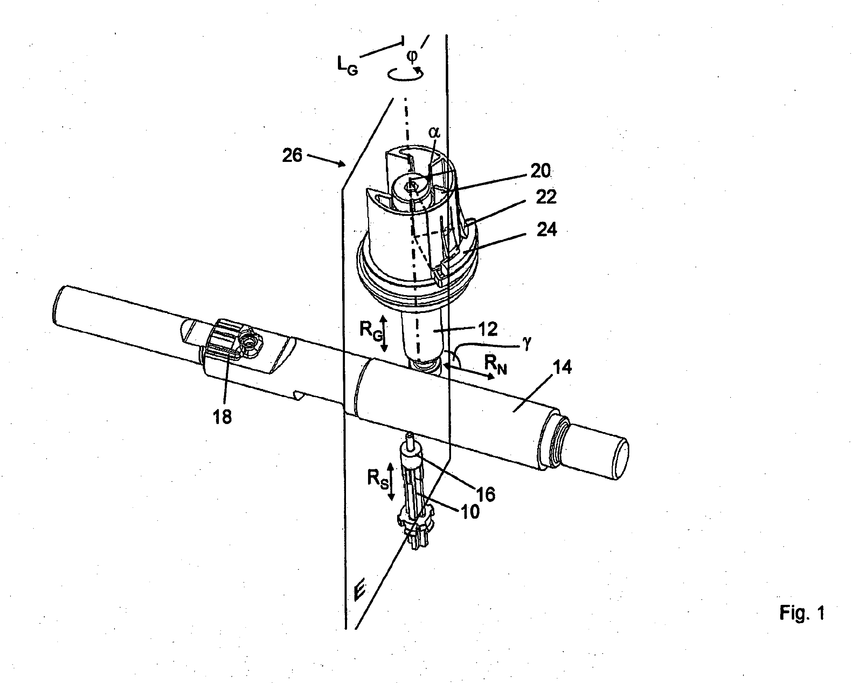

Figur 1 zeigt eine Splitstufenstange 10 eines ansonsten nicht eingezeichneten Getriebes, die in eine Splitsensor-Messrichtung R_{S} längs verschieblich ist. Figur 1 zeigt zudem eine Gassenstange 12, die in eine Gassensensor-Messrichtung R_{G} längs verschieblich gelagert ist. Eingezeichnet ist zudem eine Gangstange 14, die in eine Gangsensor-Messrichtung R_{N} verschieblich gelagert ist. Die Splitsensor-Messrichtung R_{S} und die Gangsensor-Messrichtung R_{G} sind parallel zueinander und spannen eine Messrichtungsebene E auf. Die Gangsensor-Messrichtung R_{N} verläuft unter einem Winkel γ zur Messrichtungsebene E, wobei der Winkel γ im vorliegenden Fall 90° beträgt, so dass die Gangsensor-Messrichtung R_{N} in Normalenrichtung zur Messrichtungsebene E verläuft.

An der Splitstufenstange 10 ist ein Splitsensor-Ringmagnet 16 angeordnet, den die Splitstufenstange 10 zentrisch in seiner Längsrichtung durchgreift. Der Splitsensor-Ringmagnet 16 ist Teil eines Splitsensors, der ausgebildet ist zum Erfassen einer Schaltstellung der Splitstufenstange 10.

An der Gangstange 14 ist ein Gangsensormagnet 18 befestigt, beispielsweise angeklebt oder angeschraubt. Der Gangsensormagnet ist Teil eines Gangsensors, der ausgebildet ist zum Erfassen einer Gangstangenposition der Gangstange 14. An der Gassenstange 12 ist ein Adapter 20 so befestigt, dass er in Gassensensor-Messrichtung R_{G} unverschieblich ist. Der Adapter 20 besitzt eine Gassensensormagnet-Aufnahme 22, mittels der ein Gassensensormagnet 24 befestigt, im vorliegenden Fall eingeklippst ist. Der Gassensensormagnet 24 ist kreissegmentförmig und erstreckt sich über einen Gassenstangen-Umfangswinkel α von 90°. In anderen Worten erscheint der Gassensensormagnet 24 von einer Gassenstangen-Längsachse L_{G} aus gesehen unter einem Winkel von 90°. Die Bestimmung des Gassenstangen-Umfangswinkels α ist in Figur durch gestrichelte Linien angedeutet. Die oben erwähnte Gassenstangen-Längsrichtung entspricht der Gassenstangen-Längsachse.

Der Adapter 20 ist im vorliegenden Fall als Kunststoff-Spritzgussteil ausgebildet und weist eine Führungsnut 26 auf, in die eine nicht eingezeichnete Führungsnase einer ebenfalls nicht eingezeichneten Führungshülse eingreift. Dadurch ist der Adapter 20 drehsicher befestigt, das heißt, dass er nur um einen Drehwinkel ϕ von wenigen Grad um die Gassenstangen-Längsachse L_{G} drehen kann.

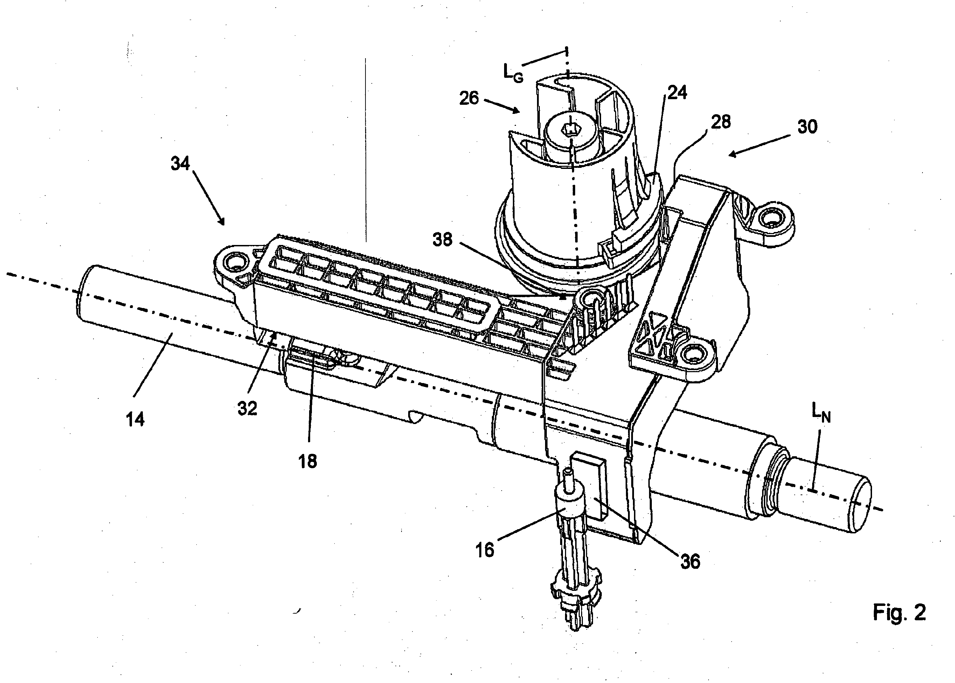

Figur 2 zeigt dem Gassensensormagneten 24, der zwischen 4 mm und 9 mm von einem Gassensensorelement 28 beabstandet ist und mit diesem zusammen Teil eines Gassensensors 30 ist. Das Gassensensorelement ist ein PLCD-Sensorelement, mit dessen Hilfe die Position des Gassensensormagneten 24 entlang der Gassenstangen-Längsachse L_{G} detektiert wird.

Figur 2 zeigt zudem ein Gangsensorelement 32, das zusammen mit dem Gangsensormagneten 18 Teil eines Gangsensors 34 ist, der eine Gangstangenposition der Gangstange 14 entlang ihrer Gangstangen-Längsachse L_{N} detektiert.

Der Splitsensor-Ringmagnet 16 wirkt mit einem schematisch eingezeichneten Splitsensorelement 36 zusammen, das die Lage des Splitsensor-Ringmagneten 16 erfasst. Das Gassensensorelement 28, das Gangsensorelement 32 und das Splitsensorelement 36 sind alle mit einem gemeinsamen Auswertechip verbunden, der die jeweiligen Positionen der Splitstufenstange 10, der Gassenstange 12 und der Gangstange 14 errechnet und die so ermittelten Positionen über eine einzige Schnittstelle 38 ausgibt.

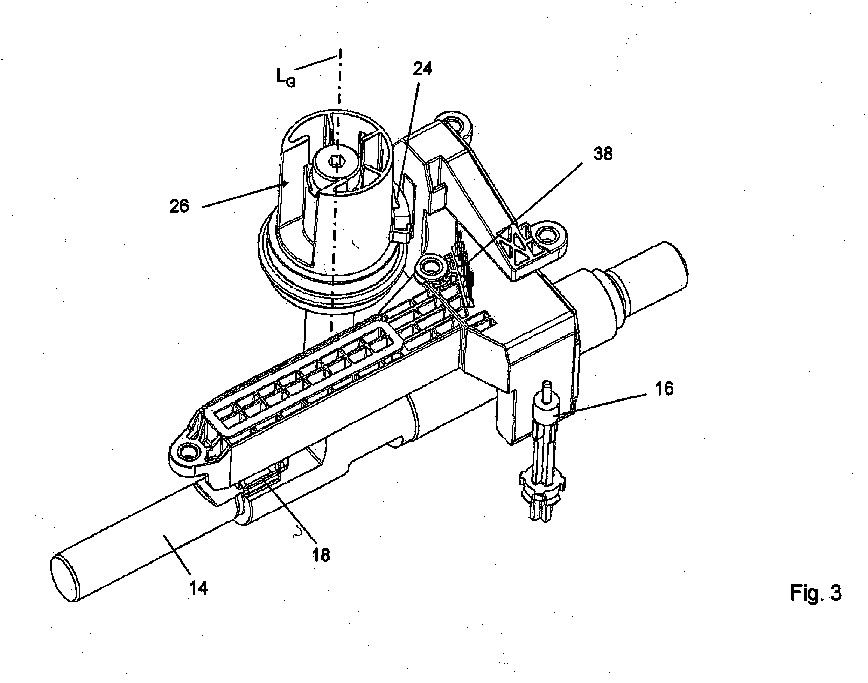

Figur 3 zeigt die in Figur 2 gezeigten Komponenten in einer anderen Ansicht, bei der die Führungsnut 26 einsehbar ist.

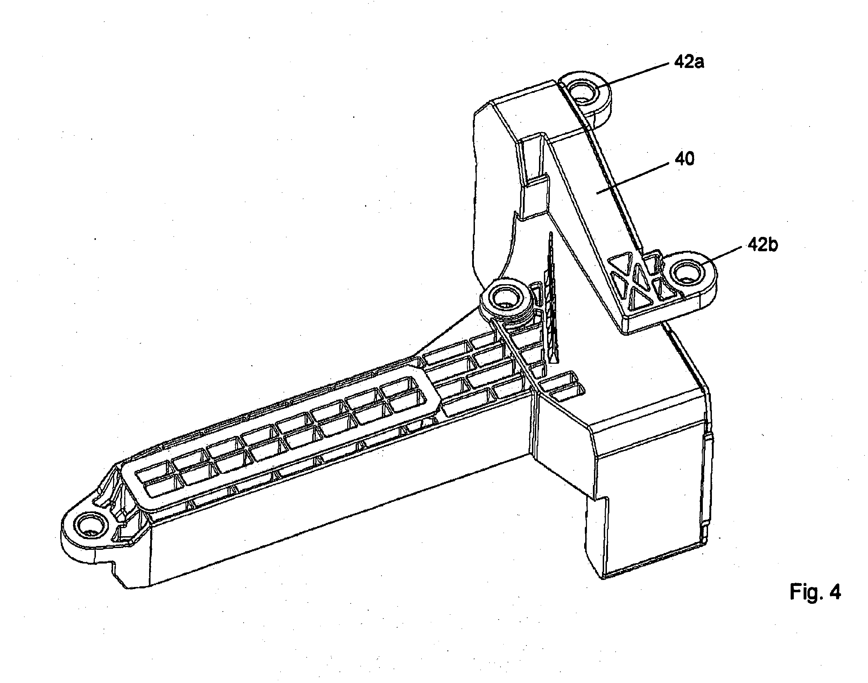

Figur 4 zeigt ein Sensorelementgehäuse 40, das das Gassensensorelement 28 (vgl. Figur 2), das Gangsensorelement 32 und das Splitsensorelement 36 in sich aufnimmt. Über zwei Montagebohrungen 42a, 42b kann das Sensorelementgehäuse 40 an weiteren Komponenten des erfindungsgemäßen Getriebestellers befestigt werden. Die vom Sensorelementgehäuse 40 umschlossenen und an diesem befestigten Komponenten bilden eine Sensorbaugruppe, die einen eigenständigen Erfindungsgegenstand darstellt.

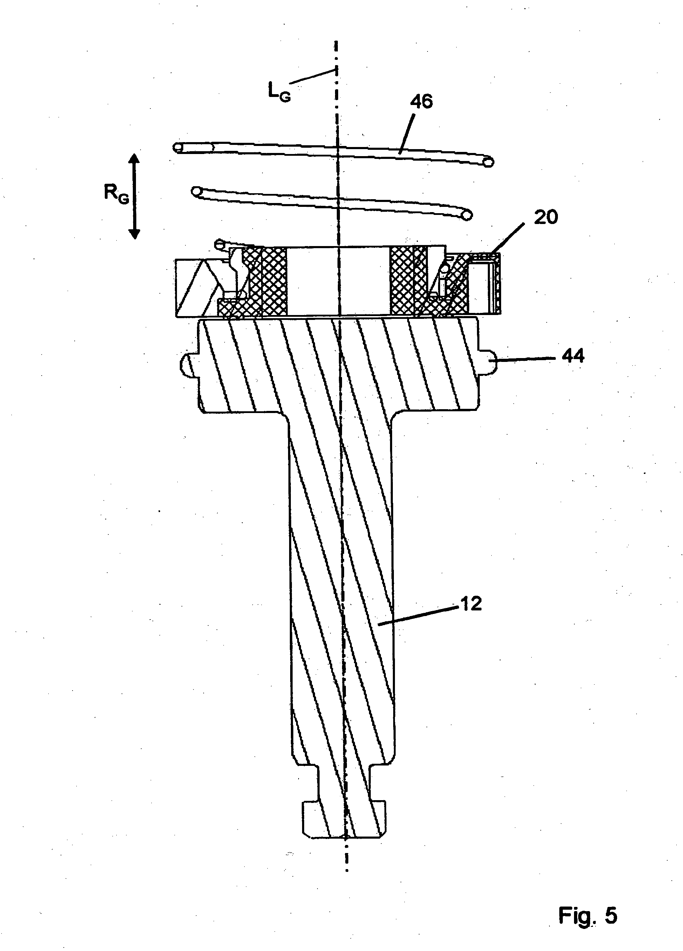

Figur 5 zeigt eine Gassenstange 12, die ein Kopfteil 44 besitzt, an dem der Adapter 20 befestigt ist. An dem Adapter 20 ist eine Spiralfeder 46 drehfest befestigt, die ihrerseits an dem Sensorelementgehäuse 40 (vgl. Figur 4) drehfest befestigt ist. Da die Spiralfeder 46 sich damit nicht um die Gassenstangen-Längsachse L_{G} drehen kann, ist auch der Adapter 20 drehfest relativ zum Sensorelementgehäuse 40 montiert. Der Adapter 20 ist dennoch in Gassensensor-Messrichtung R_{G} bewegbar.

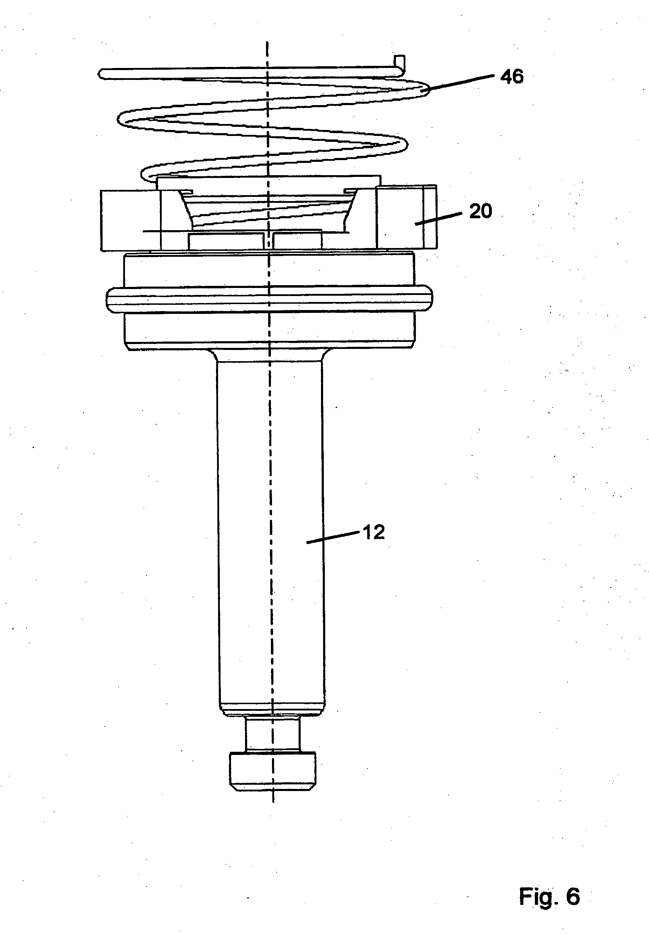

Figur 6 zeigt eine Seitenansicht des Adapters 20. Es ist zu erkennen, dass die Spiralfeder 46 einen Arretierabschnitt 48 besitzt, mit dem sie am Sensorelementgehäuse 40 befestigt ist.

## Patentansprüche

1. Getriebesteller für ein Getriebe, mit
(a) einem Splitsensor (16, 36), der ausgebildet ist zum Erfassen einer Schaltstellung einer in eine Splitsensor-Messrichtung (R_{S}) längsverschieblichen Splitstufenstange des Getriebes,
(b) einem Gassensensor (30), der ausgebildet ist zum Erfassen einer Gassenstangenposition einer in eine Gassensensor-Messrichtung (R_{G}) längsverschieblichen Gassenstange des Getriebes und
(c) einem Gangsensor (34), der ausgebildet ist zum Erfassen einer Gangstangenposition einer in eine Gangsensor-Messrichtung (R_{N}) längsverschieblichen Gangstange des Getriebes,
**dadurch gekennzeichnet, dass**
(d) zwei Messrichtungen (R_{S}, R_{G}) im Wesentlichen parallel verlaufen und eine Messrichtungsebene (E) aufspannen und
(e) die dritte Messrichtung (R_{N}) mit der Messrichtungsebene (E) einen stumpfen Winkel (γ) bildet.

2. Getriebesteller nach Anspruch 1, **dadurch gekennzeichnet, dass** die dritte Messrichtung (R_{N}) mit der Messrichtungsebene (E) einen Winkel (γ) von mehr als 80° einschließt.

3. Getriebesteller nach einem der Ansprüche 1 oder 2, **dadurch gekennzeichnet, dass** die Splitsensor-Messrichtung (R_{S}) und die Gassensensor-Messrichtung (R_{G}) im Wesentlichen parallel verlaufen und die Gangsensor-Messrichtung (R_{N}) mit der Messrichtungsebene (E) einen stumpfen Winkel (γ), insbesondere von mehr als 80°, bildet.

4. Getriebesteller nach einem der vorstehenden Ansprüche, **dadurch gekennzeichnet, dass** der Gassensensor (30) einen Gassensensormagneten (24) umfasst, der sich über weniger als ein Drittel, insbesondere über weniger als ein Fünftel eines Gassenstangen-Umfangswinkels (α) der Gassenstange (12) erstreckt.

5. Getriebesteller nach Anspruch 4, **dadurch gekennzeichnet, dass** der Gassensensormagnet (24) kreissegmentförmig befestigt ist.

6. Getriebesteller nach einem der Ansprüche 4 oder 5, **dadurch gekennzeichnet, dass**
- der Gassensensormagnet (24) an einem Adapter (20) befestigt ist, der in einer Gassenstangen-Längsrichtung (L_{N}) unverschieblich an der Gassenstange (12) befestigt ist und
- der Adapter (20) um die Gassenstangen-Längsrichtung (L_{G}) drehsicher in einer Führungshülse geführt ist.

7. Getriebesteller nach einem der Ansprüche 1 bis 5, **gekennzeichnet durch**
- ein Gehäuse (40) und
- eine am Gehäuse (40) drehsicher befestigte Spiralfeder (46),
- wobei der Adapter (20) drehsicher an der Spiralfeder (46) befestigt ist, so dass der Adapter (20) drehsicher am Gehäuse (40) befestigt ist.

8. Getriebesteller nach einem der Ansprüche 4 bis 7, **dadurch gekennzeichnet, dass** der Gassensensor (30) ein Gassensensorelement (28) umfasst zum Erfassen der Gassenstangenposition durch Messen einer Gassensensormagnet-Position des Gassensensormagneten (24).

9. Getriebesteller nach einem der vorstehenden Ansprüche, **dadurch gekennzeichnet, dass** der Gangsensor (34) ein Gangsensorelement (32) umfasst, das angeordnet ist zum Erfassen der Gangstangenposition durch Messen einer Gangsensormagnet-Position eines Gangsensormagneten (18).

10. Getriebesteller nach einem der vorstehenden Ansprüche, **dadurch gekennzeichnet, dass**
- der Splitsensor (16, 36) einen Splitsensor-Ringmagneten (16) umfasst, der an der Splitstufenstange (10) befestigt ist,
- wobei die Splitstange (10) so zum Getriebe angeordnet ist, dass ein Schalten einer Splitstufe des Getriebes zu einer Längsverschiebung des Splitsensor-Ringmagneten (16) führt, und
- wobei der Splitsensor ein Splitsensorelement (36) umfasst, das angeordnet ist zum Erfassen dieser Längsverschiebung.

11. Getriebesteller nach einem der vorstehenden Ansprüche 8 bis 10, **dadurch gekennzeichnet, dass** das Splitsensorelement (36), das Gassensensorelement (28) und/oder das Gangsensorelement (32) ein PLCD-Gangsensorelemeht ist.

12. Getriebesteller nach Anspruch 11, **gekennzeichnet durch** ein Sensorelementgehäuse (40), das das Splitsensorelement (36), das Gassensensorelement (28) und das Gangsensorelement (32) umgreift.

13. Getriebe mit einem Getriebesteller nach einem der vorstehenden Ansprüche.

## Claims

1. Transmission actuator for a transmission, having
(a) a split sensor (16, 36) which is designed to detect a shift position of a split stage rod, which is longitudinally movable in a split sensor measurement direction (R_{S}), of the transmission,
(b) a shift gate sensor (30) which is designed to detect a shift gate rod position of a shift gate rod, which is longitudinally movable in a shift gate sensor measurement direction (R_{G}), of the transmission, and
(c) a gear sensor (34) which is designed to detect a gear rod position of a gear rod, which is longitudinally movable in a gear sensor measurement direction (R_{N}), of the transmission, **characterized in that**
(d) two measurement directions (R_{S}, R_{G}) run substantially parallel and span a measurement direction plane (E), and
(e) the third measurement direction (R_{N}) forms an obtuse angle (γ) with the measurement direction plane (E).

2. Transmission actuator according to Claim 1, **characterized in that** the third measurement direction (R_{N}) encloses an angle (γ) of greater than 80° with the measurement direction plane (E).

3. Transmission actuator according to one of Claims 1 or 2, **characterized in that** the split sensor measurement direction (R_{S}) and the shift gate sensor measurement direction (R_{G}) run substantially parallel and the gear sensor measurement direction (R_{N}) forms an obtuse angle (γ), in particular of greater than 80°, with the measurement direction plane (E).

4. Transmission actuator according to one of the preceding claims, **characterized in that** the shift gate sensor (30) comprises a shift gate sensor magnet (24) which extends over less than one third, in particular over less than one fifth, of a shift gate rod circumferential angle (α) of the shift gate rod (12).

5. Transmission actuator according to Claim 4, **characterized in that** the shift gate sensor magnet (24) is fastened in circular segment form.

6. Transmission actuator according to one of Claims 4 or 5, **characterized in that**
- the shift gate sensor magnet (24) is fastened to an adapter (20) which is fastened to the shift gate rod (12) so as to be immovable in a shift gate rod longitudinal direction (L_{N}), and
- the adapter (20) is guided in a guide sleeve so as to be rotationally fixed about the shift gate rod longitudinal direction (L_{G}).

7. Transmission actuator according to one of Claims 1 to 5, **characterized by**
- a housing (40) and
- a spiral spring (46) rotationally fixedly fastened to the housing (40),
- with the adapter (20) being rotationally fixedly fastened to the spiral spring (46) such that the adapter (20) is rotationally fixedly fastened to the housing (40).

8. Transmission actuator according to one of Claims 4 to 7, **characterized in that** the shift gate sensor (30) comprises a shift gate sensor element (28) for detecting the shift gate rod position by measuring a shift gate sensor magnet position of the shift gate sensor magnet (24).

9. Transmission actuator according to one of the preceding claims, **characterized in that** the gear sensor (34) comprises a gear sensor element (32) which is arranged so as to detect the gear rod position by measuring a gear sensor magnet position of a gear sensor magnet (18).

10. Transmission actuator according to one of the preceding claims, **characterized in that**
- the split sensor (16, 36) comprises a split sensor annular magnet (16) which is fastened to the split stage rod (10),
- with the split rod (10) being arranged relative to the transmission such that a shift of the split stage of the transmission leads to a longitudinal movement of the split sensor annular magnet (16), and
- with the split sensor comprising a split sensor element (36) which is arranged so as to detect said longitudinal movement.

11. Transmission actuator according to one of the preceding Claims 8 to 10, **characterized in that** the split sensor element (36), the shift gate sensor element (28) and/or the gear sensor element (32) is a PLCD gear sensor element.

12. Transmission actuator according to Claim 11, **characterized by** a sensor element housing (40) which engages around the split sensor element (36), the shift gate sensor element (28) and the gear sensor element (32).

13. Transmission having a transmission actuator according to one of the preceding claims.

## Revendications

1. Actionneur de transmission comportant
(a) un détecteur de doublage (16, 36) conçu pour détecter une position d'une tige de rapport doublé de la transmission disposée de façon à coulisser longitudinalement dans une direction de mesure de détecteur de doublage (R_{S}),
(b) un détecteur de gorge (30) conçu pour détecter une position d'une tige de gorge de la transmission disposée de façon à coulisser longitudinalement dans une direction de mesure de détecteur de gorge (R_{G}) et
(c) un détecteur de rapport (34) conçu pour détecter une position d'une tige de rapport de la transmission disposée de façon à coulisser longitudinalement dans une direction de mesure de détecteur de rapport (R_{N}),
**caractérisé en ce que**
(d) deux directions de mesure (R_{S}, R_{G}) sont essentiellement parallèles et forment un plan de direction de mesure (E) et
(e) **en ce que** la troisième direction de mesure (R_{N}) forme un angle obtus (γ) avec le plan de direction de mesure (E).

2. Actionneur de transmission selon la revendication 1, **caractérisé en ce que** la troisième direction de mesure (R_{N}) forme avec le plan de direction de mesure (E) un angle (γ) supérieur à 80°.

3. Actionneur de transmission selon l'une des revendications 1 ou 2, **caractérisé en ce que** la direction de mesure de détecteur de doublage (R_{S}) et la direction de mesure de détecteur de gorge (R_{G}) sont essentiellement parallèles et **en ce que** la direction de mesure de détecteur de gorge (R_{N}) forme avec le plan de direction de mesure (E) un angle obtus (γ) en particulier supérieur à 80°.

4. Actionneur de transmission selon l'une des revendications précédentes, **caractérisé en ce que** le détecteur de gorge (30) comporte un aimant (24) de détecteur de gorge qui s'étend sur moins d'un tiers et en particulier sur moins d'un cinquième de l'angle périphérique (α) de la tige de gorge (12).

5. Actionneur de transmission selon la revendication 4, **caractérisé en ce que** l'aimant (24) de détecteur de gorge est fixé en forme de segment de cercle.

6. Actionneur de transmission selon l'une des revendications 4 ou 5, **caractérisé en ce que**
l'aimant (24) de détecteur de gorge est fixé sur un adaptateur (20) fixé de manière non coulissante sur la tige de gorge (12) dans une direction longitudinale (L_{N}) de tige de gorge et
**en ce que** l'adaptateur (20) est guidé à rotation sécurisée dans une douille de guidage autour de la direction longitudinale (L_{G}) de tige de gorge.

7. Actionneur de transmission selon l'une des revendications 1 à 5, **caractérisé par**
un boîtier (40),
un ressort spiralé (46) fixé à rotation sécurisée sur le boîtier (40),
l'adaptateur (20) étant fixé à rotation sécurisée sur le ressort spiralé (46) de telle sorte que l'adaptateur (20) soit fixé à rotation sécurisée sur le boîtier (40).

8. Actionneur de transmission selon l'une des revendications 4 à 7, **caractérisé en ce que** le détecteur de gorge (30) comporte un élément (28) de détecteur de gorge qui saisit la position de la tige de gorge par mesure de la position de l'aimant (24) de détecteur de gorge.

9. Actionneur de transmission selon l'une des revendications précédentes, **caractérisé en ce que** le détecteur de gorge (34) comporte un élément (32) de détecteur de gorge disposé de manière à saisir la position de la tige de gorge par mesure de la position d'un aimant (18) de capteur de gorge.

10. Actionneur de transmission selon l'une des revendications précédentes, **caractérisé en ce que** le détecteur de doublage (16, 36) comporte un aimant annulaire (16) de détecteur de doublage fixé sur la tige de rapport doublé (10),
**en ce que** la tige de doublage (10) est disposée par rapport à la transmission de telle sorte que la commande d'un rapport doublé de la transmission entraîne un coulissement longitudinal de l'aimant annulaire (16) de détecteur de doublage et
**en ce que** le détecteur de doublage comporte un élément (36) de détecteur de doublage disposé de manière à saisir ce déplacement longitudinal.

11. Actionneur de transmission selon l'une des revendications 8 à 10 qui précèdent, **caractérisé en ce que** l'élément (36) de détecteur de doublage, l'élément (28) de détecteur de gorge et/ou l'élément (32) de détecteur de rapport sont des éléments PLCD de détecteur de rapport.

12. Actionneur de transmission selon la revendication 11, **caractérisé par** un boîtier (40) d'élément de détecteur qui chevauche l'élément (36) de détecteur de doublage, l'élément (28) de détecteur de gorge et l'élément (32) de détecteur de rapport.

13. Transmission dotée d'un actionneur de transmission selon l'une des revendications précédentes.
